(19) **Europäisches Patentamt**
**European Patent Office**
**Office européen des brevets**

(11) **EP 4 755 793 A1**

(12) **DEMANDE DE BREVET EUROPEEN**

(43) Date de publication:
**10.06.2026 Bulletin 2026/24**

(21) Numéro de dépôt: **25217421.4**

(22) Date de dépôt: **20.11.2025**

(51) Classification Internationale des Brevets (IPC):
**B64C 9/02** (2006.01)     **B64C 13/24** (2006.01)
**B64D 45/00** (2006.01)

(52) Classification Coopérative des Brevets (CPC):
**B64D 45/0005; B64C 9/02; B64C 13/24;**
B64D 2045/0085

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **09.12.2024 FR 2413634**

(71) Demandeur: **AIRBUS OPERATIONS (S.A.S.)**
**31060 Toulouse (FR)**

(72) Inventeur: **HOLLANDE, Frédéric**
**31060 Toulouse Cedex 9 (FR)**

(74) Mandataire: **Airbus-OPS SAS**
**P.O. Box M0101/1**
**316, route de Bayonne**
**31060 Toulouse Cedex 9 (FR)**

(54) **PROCEDE ET SYSTEME DE DETERMINATION AUTOMATIQUE DES JEUX MECANIQUES DES SURFACES DE CONTROLE D'UN AERONEF**

(57)     Il est proposé ici un procédé et un système de détermination automatique d'un jeu mécanique relatif réel entre au moins deux actionneurs d'une surface de contrôle d'un aéronef. Le procédé comprend : exécuter (302) une boucle d'asservissement en position pour asservir en position lesdits au moins deux actionneurs, collecter, pendant au moins une période prédéterminée de mesures: des premières données et des deuxièmes données, déterminer, à partir des premières données, un déplacement relatif théorique sans jeu mécanique entre lesdits au moins deux actionneurs et déterminer (303), à partir desdites deuxièmes données et du déplacement relatif théorique, un jeu mécanique relatif réel entre lesdits au moins deux actionneurs, et, si le jeu mécanique relatif réel est supérieur ou égal à un seuil prédéterminé, alors émettre (305) un message d'alerte. Ainsi, la présente divulgation permet de réduire considérablement le temps de diagnostic des jeux mécaniques réels dans des surfaces de contrôle de l'aéronef.

Fig. 3

EP 4 755 793 A1

## Description

DOMAINE TECHNIQUE

La présente divulgation concerne la détermination du jeu mécanique réel, existant dans des actionneurs de surfaces de contrôle d'un aéronef.

ETAT DE LA TECHNIQUE ANTERIEURE

Les commandes de vol d'un aéronef sont sensibles aux jeux mécaniques existant au sein de différentes pièces mécaniques composant un système de contrôle de vol de l'aéronef telles que des actionneurs braquant des surfaces de contrôle (e.g., ailerons, gouvernes de profondeur) de l'aéronef. Plus particulièrement, dans un aéronef, une surface de contrôle est maintenue en position grâce à des articulations (e.g., rotules) au niveau d'actionneurs et au niveau de la structure de l'aéronef. Ces articulations introduisent des jeux mécaniques, créant ainsi une zone dite « morte » où un déplacement de la surface de contrôle est absent malgré un mouvement des actionneurs. Ainsi, par la suite, un « jeu mécanique » peut être défini comme la distance maximale de déplacement du ou des actionneurs qui n'engendre aucun mouvement perceptible de la surface de contrôle (et réciproquement un déplacement de la surface de contrôle sans déplacement des actionneurs).

Dans certaines situations de vol, les vibrations liées à ce jeu mécanique sont ressenties par les pilotes au niveau des commandes de vol. Si les vibrations sont trop importantes, ces derniers peuvent interrompre alors le vol pour dérouter l'aéronef vers un aéroport à proximité. L'aéronef se retrouve donc immobilisé au sol notamment pour identifier les jeux mécaniques pouvant être à l'origine des vibrations ressenties.

Actuellement l'identification des jeux mécaniques est réalisée manuellement, ce qui conduit à des temps d'immobilisation de l'aéronef importants, pouvant atteindre rapidement des demi-journées d'interruption d'exploitation. Ceci a donc un impact important sur la compagnie aérienne, le trafic aérien, la gestion locale de l'aéroport et de ses moyens de maintenance matériels et humains.

Il est alors souhaitable de pallier cet inconvénient de l'état de la technique. En particulier, il est souhaitable de fournir une solution qui permette de réduire le temps d'identification et de caractérisation des jeux mécaniques des surfaces de contrôle de vol d'un aéronef.

Le document JP 2019 172175 A divulgue un procédé selon l'art antérieur, de détermination automatique d'un jeu mécanique entre deux actionneurs d'une surface de contrôle d'un aéronef.

EXPOSE DE L'INVENTION

Il est proposé ici un procédé de détermination automatique d'un jeu mécanique relatif réel entre au moins deux actionneurs d'une surface de contrôle d'un aéronef. Ce procédé est implémenté dans un système implémenté sous forme de circuiterie électronique, et comprend :

- exécuter une boucle d'asservissement en position pour asservir en position neutre au moins l'un parmi lesdits au moins deux actionneurs et pour asservir en position l'autre actionneur parmi lesdits au moins deux actionneurs selon un signal de consigne de forme triangulaire ou de forme sinusoïdale,

- lors de l'exécution de ladite boucle d'asservissement en position, collecter, pendant au moins une période prédéterminée de mesures k, avec k un entier tel que $1 \leq k \leq n$, n étant un entier pair supérieur ou égal à 2 : des premières données représentatives de mesures des efforts exercés par chacun desdits au moins deux actionneurs pour la mise sous contraintes de ladite surface de contrôle et des deuxièmes données représentatives de mesures de déplacements de chacun desdits au moins deux actionneurs,

- déterminer, à partir desdites premières données collectées, un déplacement relatif théorique sans jeu mécanique entre lesdits au moins deux actionneurs,

- déterminer, à partir desdites deuxièmes données collectées et dudit déplacement relatif théorique déterminé, un jeu mécanique relatif réel entre lesdits au moins deux actionneurs, et, si ledit jeu mécanique relatif réel déterminé est supérieur ou égal à un seuil prédéterminé, alors émettre un message d'alerte.

Ainsi, la présente divulgation permet de réduire considérablement le temps de diagnostic, c'est-à-dire d'identification et de caractérisation, des jeux mécaniques réels au niveau des articulations des actionneurs et des attaches avec la structure de surfaces de contrôle de l'aéronef en remplaçant le procédé actuel qui est manuel par un procédé automatique amorcé depuis la cabine de pilotage. Il est ainsi possible pour les compagnies aériennes qui le souhaitent d'optimiser leur stratégie de maintenance planifiée. En particulier, une compagnie peut privilégier des intervalles de maintenance planifiée plus courts en vue de réduire le risque d'interruption opérationnelle pour problème vibratoire lié aux jeux mécaniques réels des surfaces de contrôle.

Selon un mode de réalisation, le jeu mécanique relatif réel est déterminé à partir de l'équation suivante :

$$J_{i,j} = \frac{2}{n} \sum_{k}^{1 \leq k \leq n} \left( \left| (Xm_{i,k} - Xm_{j,k}) \right| - \frac{\left| Fm_{i,k} - Fm_{j,k} \right|}{2 * K_{i,j}} \right)$$

avec : n étant un entier pair supérieur ou égal à 2, $Xm_{i,k}$ et $Xm_{j,k}$ correspondant, pour chacun desdits au moins deux actionneurs (i, j), à une moyenne des deuxièmes données, $K_{i,j}$ correspondant à une raideur inter-actionneur entre lesdits au moins deux actionneurs (i, j), $Fm_{i,\ k}$ et $Fm_{j,\ k}$ correspondant, pour chacun desdits au moins deux actionneurs, à une moyenne des premières données.

Selon un mode de réalisation, le procédé comprend en outre : corriger une erreur de réglage entre lesdits au moins deux actionneurs.

Selon un mode de réalisation, la boucle d'asservissement comprend : une première boucle d'asservissement à gain direct combinée à une deuxième boucle d'asservissement comprenant un intégrateur.

Il est également proposé ici un procédé de maintenance d'au moins un actionneur d'une surface de contrôle d'un aéronef comprenant :

- déterminer automatiquement un jeu mécanique relatif réel entre au moins deux actionneurs de la surface de contrôle selon un procédé de détermination automatique tel que décrit précédemment,
- effectuer et/ou planifier une maintenance d'au moins un desdits au moins deux actionneurs quand un message d'alerte est émis par l'exécution d'un procédé de détermination automatique tel que décrit précédemment.

Il est également proposé ici un système de détermination automatique d'un jeu mécanique relatif réel entre au moins deux actionneurs d'une surface de contrôle d'un aéronef. Ce système comprenant de la circuiterie électronique configurée pour :

- exécuter une boucle d'asservissement en position pour asservir en position neutre au moins l'un parmi lesdits au moins deux actionneurs et pour asservir en position l'autre actionneur parmi lesdits au moins deux actionneurs selon un signal de consigne de forme triangulaire ou de forme sinusoïdale,

- lors de l'exécution de ladite boucle d'asservissement en position, collecter, pendant au moins une période prédéterminée de mesures k, avec k un entier tel que $1 \leq k \leq n$, n étant un entier pair supérieur ou égal à 2 : des premières données représentatives de mesures des efforts exercés par chacun desdits au moins deux actionneurs pour la mise sous contraintes de ladite surface de contrôle et des deuxièmes données représentatives de mesures de déplacements de chacun desdits au moins deux actionneurs,

- déterminer, à partir desdites premières données collectées, un déplacement relatif théorique sans jeu mécanique entre lesdits au moins deux actionneurs,

- déterminer, à partir desdites deuxièmes données collectées et dudit déplacement relatif théorique déterminé, un jeu mécanique relatif réel entre lesdits au moins deux actionneurs, et, si ledit jeu mécanique relatif réel déterminé est supérieur ou égal à un seuil prédéterminé, alors émettre un message d'alerte.

Il est également proposé ici un aéronef comprenant le système tel que décrit précédemment.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur. Il est aussi proposé un support de stockage, stockant de telles instructions.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

La figure 1 illustre schématiquement, en vue de côté, un aéronef équipé d'un système de détermination automatique d'un jeu mécanique relatif réel entre au moins deux actionneurs d'une surface de contrôle d'un aéronef, selon un mode de réalisation ;

La figure 2 illustre schématiquement un exemple d'architecture matérielle d'un système de détermination automatique d'un jeu mécanique relatif réel entre au moins deux actionneurs d'une surface de contrôle d'un aéronef, selon un mode de réalisation ;

La figure 3 illustre sous forme de diagramme les étapes d'un procédé de détermination d'un jeu mécanique relatif réel entre au moins deux actionneurs d'une surface de contrôle d'un aéronef, selon un mode de réalisation ;

La figure 4 illustre sous forme de graphique un exemple de déplacement de deux actionneurs d'une même surface de contrôle d'un aéronef au cours du procédé de détermination d'un jeu mécanique relatif réel entre ces deux actionneurs d'une surface de contrôle d'un aéronef, selon un mode de réalisation ;

La figure 5 illustre schématiquement une boucle d'asservissement en position contrôlant la position des actionneurs d'une surface de contrôle d'un aéronef, selon un mode de réalisation.

## EXPOSE DETAILLE DE MODES DE REALISATION

Le principe général de la présente divulgation concerne la détermination automatique du jeu mécanique réel au sein des actionneurs d'une surface de contrôle d'un aéronef. Cette détermination est dite « automatique » car effectuée sans intervention humaine, en opposition au procédé manuel connu de l'état de l'art. La présente divulgation s'applique à des aéronefs comprenant des surfaces de contrôle pouvant être braquées par deux actionneurs ou plus. Chaque actionneur est déjà équipé d'au moins un capteur de pression ou d'effort adapté pour mesurer un effort en extension et en rétraction dudit actionneur et au moins un capteur de position adapté pour mesurer un déplacement dudit actionneur. Le terme « effort » est défini ici comme étant l'ensemble des forces qu'exerce l'actionneur pour mettre en mouvement la surface de contrôle, soit lors d'un déplacement dans un sens dit d'« extension », soit lors d'un déplacement dans un sens dit de « rétraction ». Le terme « extension » correspond à un mouvement de l'actionneur par lequel l'actionneur se déploie ou s'allonge par rapport à une position de départ (e.g., position neutre). Le terme « rétraction » correspond à un mouvement de l'actionneur par lequel l'actionneur se replie ou se rétrécie par rapport à une position de départ.

Par la suite, à titre illustratif, il est considéré qu'une surface de contrôle comprend deux actionneurs. Il est à noter que le procédé décrit ci-dessous peut également s'appliquer à des surfaces de contrôle comprenant plus de deux actionneurs.

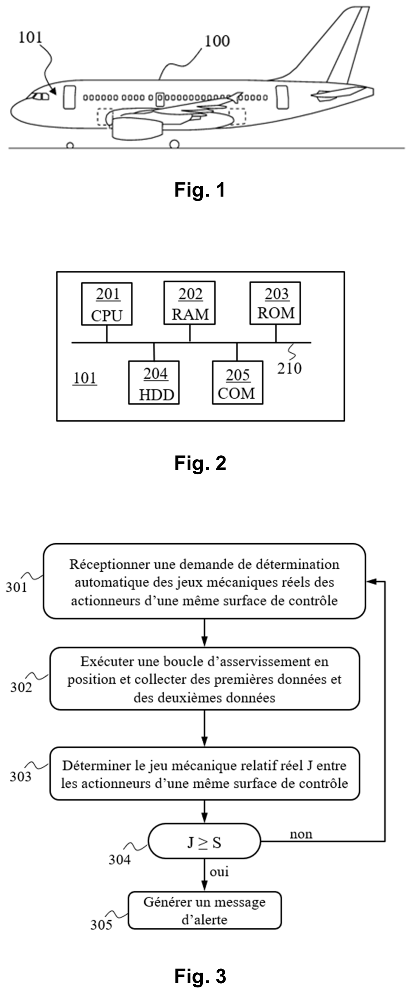

La **figure 1** illustre ainsi schématiquement, en vue de côté, un aéronef 100 équipé d'un système 101 de détermination automatique du jeu mécanique relatif réel entre au moins deux actionneurs d'une surface de contrôle de l'aéronef 100 (aussi appelé par la suite système 101), selon un mode de réalisation.

Le système 101 est un équipement électronique embarqué dans l'aéronef 100. Par exemple, le système 101 fait partie de la circuiterie électronique de l'avionique de l'aéronef 100. Par exemple, le système 101 est intégré aux calculateurs de commandes de vol de l'aéronef 100. Les calculateurs de commande vol sont configurés pour transmettre un ordre de gouverne (e.g., sous la forme d'un angle de braquage des surfaces de contrôle) aux actionneurs qui braquent alors des surfaces de contrôle de l'aéronef 100. En outre, les calculateurs de commandes de vol sont configurés pour recevoir des mesures effectuées par les capteurs de pression et les capteurs de position des actionneurs des surfaces de contrôle de l'aéronef 100.

Ainsi, le système 101 est configuré pour exploiter les capacités des calculateurs de commandes de vol de l'aéronef 100 et en particulier, d'exploiter les données et mesures déjà mises à disposition des calculateurs de commandes de vol de l'aéronef 100. La présente divulgation ne nécessite donc pas l'utilisation de nouveaux matériels (e.g. capteur, jauge, ou nouveau calculateur).

Par ailleurs, le système 101 est configuré pour recevoir, *via* une interface homme-machine de la cabine de pilotage (« cockpit » en anglais) de l'aéronef 100, une demande de détermination automatique des jeux mécaniques des actionneurs de surfaces de contrôle de l'aéronef 100.

La **figure 2** illustre schématiquement un exemple de plateforme matérielle permettant d'implémenter, sous forme de circuiterie électronique, le système 101, selon un mode de réalisation.

La plateforme matérielle comporte, reliés par un bus de communication 210, un processeur ou CPU (« *Central Processing Unit* » en anglais) 201 ; une mémoire vive RAM (« *Random-Access Memory* » en anglais) 202 ; une mémoire morte 203, par exemple de type ROM (« *Read Only Memory* » en anglais) ou EEPROM (« *Electrically-Erasable Programmable ROM* » en anglais), telle qu'une mémoire Flash ; une unité de stockage, telle qu'un disque dur HDD (« *Hard Disk Drive* » en anglais) 204, ou un lecteur de support de stockage, tel qu'un lecteur de cartes SD (« *Secure*

*Digital* » en anglais) ; et un gestionnaire d'interfaces COM 205.

Le gestionnaire d'interfaces COM 205 permet au système 101 d'interagir avec les systèmes avioniques de l'aéronef 100 tels que : les calculateurs de commandes de vol et l'interface homme-machine du cockpit de l'aéronef 100 *via* laquelle un utilisateur (e.g., techniciens, pilotes...) requiert un diagnostic automatique des jeux mécaniques réels, existant au sein des actionneurs de surfaces de contrôle de l'aéronef 100.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque la plateforme matérielle est mise sous tension, le processeur 201 est capable de lire de la mémoire vive 202 des instructions et de les exécuter. Ces instructions forment un programme d'ordinateur causant l'implémentation, par le processeur 201, de tout ou partie des étapes ou procédés ou plus largement des séquences de fonctionnement de l'aéronef décrites dans la présente description.

Tout ou partie des étapes, procédés et fonctionnements décrits ici peut ainsi être implémenté sous forme logicielle par exécution d'un ensemble d'instructions par une machine programmable, par exemple un processeur de type DSP (« *Digital Signal Processor* » en anglais) ou un microcontrôleur, ou être implémenté sous forme matérielle par une machine ou un composant électronique (« *chip* » en anglais) dédié ou un ensemble de composants électroniques (« *chipset* » en anglais) dédié, par exemple un composant FPGA (« *Field Programmable Gate Array* » en anglais) ou ASIC (« *Application Specific Integrated Circuit* » en anglais). D'une manière générale, le système 101 comporte de la circuiterie électronique adaptée et configurée pour implémenter tout ou partie des fonctionnements, procédés et étapes décrits ici.

La **figure 3** illustre sous forme d'un diagramme des étapes d'un procédé de détermination automatique du jeu mécanique relatif réel entre au moins deux actionneurs d'une même surface de contrôle de l'aéronef 100, selon un mode de réalisation. Tout ou partie de ce procédé est implémenté par le système 101 décrit ci-dessus.

En effet, afin de pouvoir diagnostiquer des jeux mécaniques dans des actionneurs de surfaces de contrôle de l'aéronef 100, le système 101 détermine un jeu mécanique relatif réel entre les différents actionneurs d'une même surface de contrôle.

Tout d'abord, au cours d'une étape 301, un utilisateur (e.g., technicien, pilote, etc.) requiert qu'un diagnostic automatique des jeux mécaniques réels existant au sein des actionneurs d'une ou plusieurs surfaces de contrôle de l'aéronef 100 soit effectué. Pour cela, l'utilisateur interagit avec une interface homme-machine du cockpit de l'aéronef 100. Cette interface homme-machine transmet alors au système 101 une demande de détermination automatique des jeux mécaniques réels des actionneurs d'une ou plusieurs surfaces de contrôle de l'aéronef 100. Ensuite, sur réception de cette demande de détermination automatique, le diagnostic automatique des jeux mécaniques réels dans les actionneurs d'une ou plusieurs surfaces de contrôle de l'aéronef 100 est exécuté par le système 101. Ce diagnostic automatique comprend les étapes 302 à 304 décrites ci-après.

Ainsi, au cours d'une étape 302, un premier actionneur, noté *i*, est asservi, ou contrôlé, en position neutre (i.e., asservissement à zéro) et le deuxième actionneur, noté *j*, est asservi selon un signal de forme triangulaire ou de forme sinusoïdale *via* l'exécution d'une boucle d'asservissement en position. Ceci introduit alors un effort antagoniste entre les deux actionneurs *i* et *j*, respectivement en traction, puis en compression pour chacun des actionneurs *i* et *j*.

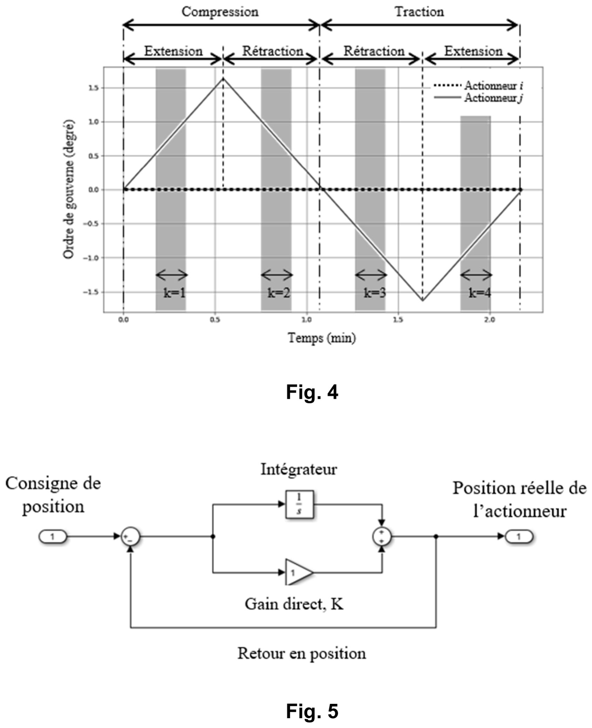

Selon cette boucle d'asservissement en position, le système 101 émet une consigne de position des actionneurs *i* et *j*. Cette consigne est ensuite transmise au calculateur de commandes de vol qui détermine, notamment à partir de cette consigne, une commande de mouvement des actionneurs pour le braquage de la surface de contrôle considérée. Les capteurs de position intégrés et/ou associés aux actionneurs *i* et *j* mesurent le déplacement desdits actionneurs *i* et *j* et transmettent les mesures de déplacement (ou positions) au calculateur de commandes de vol. Le cas échéant, le calculateur de commandes de vol corrige la position des actionneurs *i* et *j* afin de réduire la différence entre la consigne de position et la position réelle des actionneurs *i* et *j*. La **figure 4** illustre sous forme de graphique un exemple de déplacements de deux actionneurs *i* et *j* d'une même surface de contrôle de l'aéronef 100 au cours de cette étape 302, selon cette boucle d'asservissement en position.

L'asservissement du deuxième actionneur *j* selon le signal de forme triangulaire ou de forme sinusoïdale entraine un déplacement de ce dernier dans un sens dit d'extension, puis dans un sens dit de rétraction, par rapport à une position de départ.

Selon un mode de réalisation, l'amplitude maximale du signal de forme triangulaire ou de forme sinusoïdale est inférieure à la charge limite des actionneurs, par exemple, 80% de la charge limite des actionneurs.

Le calculateur de commandes de vol de l'aéronef 100 reçoit alors, en provenance des capteurs de pression et de capteurs de position intégrés et/ou associés aux actionneurs *i* et *j*, respectivement des mesures d'efforts et des mesures de déplacement (ou positions) desdits actionneurs *i* et *j*. Ces mesures d'efforts et de déplacement sont effectuées selon une fréquence prédéterminée et sur une ou plusieurs périodes prédéterminées dites périodes de mesures, notées *k*, avec *k* un entier tel que $1 \leq k \leq n$, *n* étant un entier pair supérieur ou égal à 2, au cours d'un cycle de mesures. Dans un exemple en lien avec la figure 4, le cycle de mesures comprend quatre périodes de mesures telles que $k=1$, $k=2$, $k=3$ et $k=4$. Selon un mode de réalisation, ces périodes de mesures sont dimensionnées (en termes de temps) telles qu'elles permettent l'acquisition d'un grand nombre de mesures d'efforts et de mesures de déplacements, par exemple de l'ordre de 300 mesures par période.

Ensuite, le calculateur de commandes de vol enregistre dans une mémoire, pour chaque période de mesures k=1, k=2, k=3, k=4, et pour chaque actionneur $i$ et $j$, les données suivantes :

- des premières données correspondant à des mesures d'efforts exercés par chacun des actionneurs $i$ et j notées $F_{i,k}$ et $F_{j,k}$, et

- des deuxième données correspondant à des mesures de déplacements (ou positions) de chacun des actionneurs $i$ et $j$ notées $X_{i,\ k}$ et $X_{j,\ k}$.

Le système 101 collecte ensuite ces premières et deuxièmes données *via* le calculateur de commandes de vol. Le système 101 agrège ensuite ces données pour chaque période de mesures k, par exemple en déterminant, à partir de ces données :

- des premières informations correspondant à la moyenne des mesures d'efforts exercés par l'actionneur $i,$ notée Fm $_{i,\ k}$, respectivement par l'actionneur $j$, notée Fm $_{j,\ k}$,

- des deuxièmes informations correspondant à la moyenne des mesures de déplacements (ou positions) de l'actionneur $i$, notée Xm $_{i,\ k}$, respectivement de l'actionneur $j$, notée Xm $_{j,\ k}$.

Selon un mode de réalisation présenté en lien avec la **figure 5,** la boucle d'asservissement en position permettant au système 101 et au calculateur de commandes de vol de contrôler la position de chacun des deux actionneurs $i$ et $j$ comprend, une première boucle d'asservissement à gain direct K combinée à une deuxième boucle d'asservissement comprenant un intégrateur (aussi appelée boucle d'asservissement intégrale). L'utilisation de cette boucle d'asservissement intégrale complémentaire permet d'augmenter la précision des mesures des efforts et de la position des deux actionneurs $i$ et $j$, en réduisant l'écart entre la consigne de position et la position réelle des actionneurs $i$ et $j$, mesurée par les capteurs de position intégrés et/ou associés aux actionneurs $i$ et $j$. Elle permet en particulier de limiter la plage de déplacement de l'actionneur asservie à zéro, déplacement qui est induit par la mise en mouvements de l'actionneur asservie selon un signal de forme triangulaire ou de forme sinusoïdale. La plage réduite de déplacement permet d'augmenter la précision des mesures de déplacements de l'actionneur « statique » (i.e., asservi zéro).

Au cours d'une étape 303, le système 101 détermine le jeu mécanique relatif réel entre les deux actionneurs $i$ et $j$ de la surface de contrôle considérée à partir des premières et deuxièmes informations décrites ci-dessus. Plus particulièrement, le système 101 détermine tout d'abord, pour chaque période de mesures k, la différence, notée $X_{i,\ j,\ k}$ entre la moyenne des mesures de déplacements de l'actionneur $i$ Xm $_{i,\ k}$ et de l'actionneur $j$ Xm $_{j,\ k}$ et le déplacement relatif théorique sans jeu mécanique, noté $Y_{i,\ j,\ k}$, entre les actionneurs $i$ et $j$ qui est calculé à partir de la moyenne des mesures d'efforts exercés par l'actionneur $i$ Fm $_{i,\ k}$ et par l'actionneur $j$ Fm $_{j,\ k}$, selon l'équation EQ1 suivante :

$$Y_{i,j,k} = \frac{\left|\left(Fm_{i,k} - Fm_{j,k}\right)\right|}{2 * K_{i,j}}$$

Avec $K_{i,j}$ correspondant à la raideur inter-actionneur, qui est connue par conception de l'aéronef 100 et est également systématiquement mesurée lors du développement de chaque aéronef. Les différentes raideurs inter-actionneur sont enregistrées, par exemple, dans une table ou dans une base de données accessible au système 101.

Ainsi, pour chaque période de mesures k, la différence $X_{i,\ j,\ k}$ est obtenue à partir de l'équation EQ2 suivante :

$$X_{i,j,k} = \left|\left(Xm_{i,k} - Xm_{j,k}\right)\right| - \frac{\left|\left(Fm_{i,k} - Fm_{j,k}\right)\right|}{2 * K_{ij}}$$

Le jeu mécanique relatif réel, noté $J_{i,j}$ entre les actionneurs $i$ et $j$, est égal à la somme des différences $X_{i,\ j,\ k}$, en compression et en traction. Dans l'exemple en lien avec la figure 4, le cycle de mesures comporte deux périodes de mesures en compression : k=1 et k=2 et deux périodes de mesures en traction : k=3 et k=4. Ainsi, le jeu mécanique relatif réel $J_{i,j}$ est mesuré deux fois : une première fois à partir des périodes : k=1 (compression/extension) et k=3 (traction/rétraction), et une deuxième fois à partir des périodes : k=2 (compression/rétraction) et k=4 (traction/extension). Le jeu mécanique relatif réel $J_{i,j}$ est égal à la moyenne de ces deux mesures. Ainsi, le jeu mécanique relatif réel $J_{i,j}$ entre ces deux actionneurs $i$ et $j$, avec i = 1 et j = 2, et $k \in \{1, 2, 3, 4\}$ est déterminé à partir de l'équation EQ3 suivante :

$$J_{12} = \frac{2}{n} \sum_{k}^{1 \le k \le n} \left( \left|\left( Xm_{1,k} - Xm_{2,k}\right)\right| - \frac{\left|\left( Fm_{1,k} - Fm_{2,k}\right)\right|}{2 \cdot K_{12}} \right)$$

Il est à noter que lorsque la surface de contrôle est mise en mouvement par deux actionneurs, alors le jeu mécanique relatif réel $J_{i,j}$ entre les deux actionneurs correspond à la somme des jeux mécaniques des deux actionneurs.

Selon un mode de réalisation particulier, lorsque la surface de contrôle est actionnée par trois actionneurs, le diagnostic automatique est similaire à ce qui a été décrit précédemment en lien avec les étapes 302 à 303, mais il est réalisé dans trois configurations d'actionneurs différentes alors qu'une unique configuration d'actionneurs est suffisante dans le cas d'une surface de contrôle actionnée par deux actionneurs. Plus particulièrement, dans le cas de trois actionneurs, un premier, deuxième et troisième actionneurs sont à tour de rôle soit asservis à zéro, soit asservis selon le signal de forme triangulaire ou de forme sinusoïdale, soit pilotés en mode passif (ou amorti). Le mode passif est le mode où l'actionneur n'est pas asservi en position, et ne fait que suivre la position des actionneurs actifs (i.e., asservis à zéro ou selon un signal de forme sinusoïdale ou de forme triangulaire). Ainsi, l'actionneur piloté en mode passif n'intervient pas dans la détermination des jeux mécaniques relatifs réels entre les deux autres actionneurs actifs considérés pour le diagnostic automatique.

Soit un premier actionneur 1, un deuxième actionneur 2 et un troisième actionneur 3, les trois configurations d'actionneurs sont les suivantes :

- première configuration : le premier actionneur 1 est asservi à zéro, le deuxième actionneur 2 est asservi selon le signal de forme triangulaire ou de forme sinusoïdale, le troisième actionneur 3 est piloté en mode passif ou amorti. Le système 101 détermine le jeu mécanique relatif réel entre le premier actionneur et le deuxième actionneur noté $J_{12}$ dans cette première configuration selon l'équation EQ3 ci-dessus ;

- deuxième configuration : le premier actionneur 1 est piloté en mode passif, le deuxième actionneur 2 est asservi à zéro, le troisième actionneur 3 est asservi selon le signal de forme triangulaire ou de forme sinusoïdale. Le système 101 détermine le jeu mécanique relatif réel entre le deuxième actionneur et le troisième actionneur noté $J_{23}$ dans cette deuxième configuration selon l'équation EQ3 ci-dessus ;

- troisième configuration : le premier actionneur 1 est asservi à zéro, le deuxième actionneur 2 est piloté en mode passif, le troisième actionneur 3 est asservi selon le signal de forme triangulaire ou de forme sinusoïdale. Le système 101 détermine le jeu mécanique relatif réel entre le premier actionneur et le troisième actionneur noté $J_{13}$ dans cette troisième configuration selon l'équation EQ3 ci-dessus.

Ainsi, dans le cas d'une surface de contrôle mise en mouvement par trois actionneurs, les jeux mécaniques relatifs réels totaux de chaque actionneur sont déterminés. Ces jeux mécaniques relatifs réels totaux correspondent aux jeux mécaniques individuels réels pour chaque actionneur (1, 2, 3), soit :

$$J_1 = \frac{1}{2}.J_{12} - \frac{1}{2}.J_{23} + \frac{1}{2}.J_{13}$$

$$J_2 = \frac{1}{2}.J_{12} + \frac{1}{2}.J_{23} - \frac{1}{2}.J_{13}$$

$$J_3 = -\frac{1}{2}.J_{12} + \frac{1}{2}.J_{23} + \frac{1}{2}.J_{13}$$

Avec $J_1$ le jeu mécanique individuel réel du premier actionneur 1, $J_2$ le jeu mécanique individuel réel du deuxième actionneur 2 et $J_3$ le jeu mécanique individuel réel du troisième actionneur 3.

Comme décrit précédemment, il existe un effort antagoniste entre les deux actionneurs *i* et *j*. Les deux actionneurs *i* et *j* étant en opposition, leurs capteurs de pression mesurent donc le même effort au signe près. Par ailleurs, selon certaines architectures d'aéronefs, il est prévu que les actionneurs comprennent deux capteurs de pression indépendants : un premier capteur de pression pour le contrôle de l'effort de l'actionneur et un deuxième capteur de pression pour s'assurer de la validité des signaux et du système. Ainsi, selon un mode de réalisation, afin que la mesure des efforts soit encore plus précise, la moyenne des efforts mesurés par les deux capteurs des deux actionneurs lors d'un déplacement en extension et en rétraction est déterminée. Ainsi, la moyenne des mesures d'efforts exercés sur l'actionneur $i$ sur la période k, $Fm_{i,k}$ correspond à la moyenne des mesures d'efforts effectuées par le premier capteur 1 ($Fm1_{i,k}$) et par le deuxième capteur 2 ($Fm2_{i,k}$) soit : $Fm_{i,k} = (Fm1_{i,k} + Fm2_{i,k}) / 2$.

Au cours d'une étape 304, le jeu mécanique relatif réel $J_{i,j}$ entre les deux actionneurs $i$ et $j$ est comparé à un seuil S prédéterminé. Si le jeu mécanique relatif réel $J_{i,j}$ est supérieur ou égal à ce seuil S prédéterminé, alors un message d'alerte est généré par le système 101, au cours d'une étape 305, afin de notifier l'équipage (par exemple *via* l'interface homme-machine) et/ou du personnel au sol par le biais d'une communication air-sol, d'un besoin de maintenance à vérifier et/ou à effectuer sur les actionneurs. Il est à noter que dans le cas où une surface de contrôle est mise en mouvement par plus de deux actionneurs, c'est le jeu mécanique individuel au niveau de chacun des actionneurs qui est comparé au seuil S prédéterminé.

Selon un mode de réalisation, ce message d'alerte comprend une demande de maintenance de l'équipement à effectuer et/ou à planifier. Dans un exemple, dans le cas d'une surface de contrôle actionnée par deux actionneurs, le message d'alerte permet d'identifier la surface de contrôle qui comporte un jeu trop élevé. Dans un autre exemple, dans le cas d'une surface de contrôle actionnée par plus de deux actionneurs, le message comprend une information supplémentaire qui précise les équipements présentant un jeu excessif.

Ainsi, le procédé de détermination automatique tel que décrit ci-dessus selon les différents modes de réalisation permet de réaliser un diagnostic automatique des jeux mécaniques réels des actionneurs des surfaces de contrôle en quelques minutes au lieu de plusieurs demi-journées avec le procédé manuel existant. Autrement dit, le procédé de détermination tel que décrit ci-dessus permet d'effectuer un procédé de maintenance des actionneurs des surfaces de commandes de l'aéronef 100. En particulier, grâce à la génération d'un message d'alerte comprenant notamment une demande de maintenance à effectuer et/ou à planifier, un technicien/opérateur, par exemple, peut effectuer et/ou planifier cette maintenance de ces actionneurs.

Optionnellement, préalablement à ce diagnostic automatique, le système 101 corrige l'erreur de réglage entre les deux actionneurs $i$ et $j$. Les termes « erreurs de réglage » désignent ici l'écart de position entre deux actionneurs asservis avec le même ordre d'asservissement. Pour cela, la boucle d'asservissement comprend en outre un intégrateur en parallèle de ladite boucle, afin de limiter toute erreur entre la consigne de position et la mesure de déplacement. Le premier actionneur $i$ est d'abord asservi à zéro (i.e. en position neutre). Ensuite, les capteurs de position intégrés et/ou associés au deuxième actionneur $j$ mesurent sa position notée $X_{j0}$. La position $X_{j0}$ du deuxième actionneur $j$ est alors transmise au calculateur de commandes de vol. Ainsi, lors du diagnostic automatique (i.e. étapes 302 à 304), la position commandée du deuxième actionneur $j$ est décalée de $-X_{j0}$ afin de compenser l'erreur de réglage entre les deux actionneurs $i$ et $j$. Cette étape préliminaire permet d'augmenter la précision des mesures des positions.

**Revendications**

1. Procédé de détermination automatique d'un jeu mécanique relatif réel entre au moins deux actionneurs (i, j) d'une surface de contrôle d'un aéronef (100), ledit procédé étant implémenté dans un système (101) implémenté sous forme de circuiterie électronique, ledit procédé comprenant :

   - exécuter une boucle d'asservissement en position pour asservir en position neutre au moins l'un parmi lesdits au moins deux actionneurs (i, j) et pour asservir en position l'autre actionneur parmi lesdits au moins deux actionneurs selon un signal de consigne de forme triangulaire ou de forme sinusoïdale,
   - lors de l'exécution de ladite boucle d'asservissement en position, collecter, pendant au moins une période prédéterminée de mesures k, avec k un entier tel que $1 \leq k \leq n$, n étant un entier pair supérieur ou égal à 2 : des premières données représentatives de mesures des efforts exercés par chacun desdits au moins deux actionneurs (i, j) pour la mise en mouvement de ladite surface de contrôle et des deuxièmes données représentatives de mesures de déplacements de chacun desdits au moins deux actionneurs (i, j),
   - déterminer, à partir desdites premières données collectées, un déplacement relatif théorique sans jeu mécanique entre lesdits au moins deux actionneurs (i, j),
   - déterminer, à partir desdites deuxièmes données collectées et dudit déplacement relatif théorique déterminé, un jeu mécanique relatif réel entre lesdits au moins deux actionneurs (i, j), et, si ledit jeu mécanique relatif réel déterminé est supérieur ou égal à un seuil prédéterminé, alors émettre un message d'alerte.

2. Procédé selon la revendication 1, dans lequel ledit jeu mécanique relatif réel est déterminé à partir de l'équation suivante :

$$J_{i,j} = \frac{2}{n} \sum_{k}^{1 \leq k \leq n} \left( \left| (Xm_{i,k} - Xm_{j,k}) \right| - \frac{\left| Fm_{i,k} - Fm_{j,k} \right|}{2 * K_{i,j}} \right)$$

avec :

- $n$ étant un entier pair supérieur ou égal à 2,
- $Xm_{i,k}$ et $Xm_{j,k}$ correspondant, pour chacun desdits au moins deux actionneurs (i, j), à une moyenne des deuxièmes données
- $K_{i,j}$ correspondant à une raideur inter-actionneur entre lesdits au moins deux actionneurs (i, j),
- $Fm_{i,\,k}$ et $Fm_{j,\,k}$ correspondant, pour chacun desdits au moins deux actionneurs, à une moyenne des premières données.

3. Procédé selon l'une quelconque des revendications 1 ou 2, comprenant en outre :
   corriger une erreur de réglage entre lesdits au moins deux actionneurs.

4. Procédé selon l'une quelconque des revendications 1 à 3, dans lequel ladite boucle d'asservissement comprend : une première boucle d'asservissement à gain direct combinée à une deuxième boucle d'asservissement comprenant un intégrateur.

5. Procédé de maintenance d'au moins un actionneur d'une surface de contrôle d'un aéronef (100) comprenant :

   - déterminer automatiquement un jeu mécanique relatif réel entre au moins deux actionneurs de la surface de contrôle selon un procédé de détermination automatique selon l'une quelconque des revendications 1 à 4,
   - effectuer et/ou planifier une maintenance d'au moins un desdits au moins deux actionneurs quand un message d'alerte est émis par l'exécution d'un procédé de détermination automatique selon l'une quelconque des revendications 1 à 4.

6. Système (101) de détermination automatique d'un jeu mécanique relatif réel entre au moins deux actionneurs (i, j) d'une surface de contrôle d'un aéronef (100), ledit système (101) comprenant de la circuiterie électronique configurée pour :

   - exécuter une boucle d'asservissement en position pour asservir en position neutre au moins l'un parmi lesdits au moins deux actionneurs (i, j) et pour asservir en position l'autre actionneur parmi lesdits au moins deux actionneurs selon un signal de consigne de forme triangulaire ou de forme sinusoïdale,
   - lors de l'exécution de ladite boucle d'asservissement en position, collecter, pendant au moins une période prédéterminée de mesures k, avec k un entier tel que $1 \leq k \leq n$, n étant un entier pair supérieur ou égal à 2: des premières données représentatives de mesures des efforts exercés par chacun desdits au moins deux actionneurs (i, j) pour la mise sous contraintes de ladite surface de contrôle et des deuxièmes données représentatives de mesures de déplacements de chacun desdits au moins deux actionneurs (i, j),
   - déterminer, à partir desdites premières données collectées, un déplacement relatif théorique sans jeu mécanique entre lesdits au moins deux actionneurs (i, j),
   - déterminer, à partir desdites deuxièmes données collectées et dudit déplacement relatif théorique déterminé, un jeu mécanique relatif réel entre lesdits au moins deux actionneurs (i, j), et, si ledit jeu mécanique relatif réel déterminé est supérieur ou égal à un seuil prédéterminé, alors émettre un message d'alerte.

7. Aéronef comprenant le système (101) selon la revendication 6.

8. Produit programme d'ordinateur, comportant des instructions entraînant l'exécution, par un processeur, d'un procédé selon l'une quelconque des revendications 1 à 4, lorsque lesdites instructions sont exécutées par ledit processeur.

9. Support de stockage, stockant un programme d'ordinateur comportant des instructions entraînant l'exécution, par un processeur, d'un procédé selon l'une quelconque des revendications 1 à 4, lorsque lesdites instructions sont lues et exécutées par ledit processeur.

**Fig. 1**

**Fig. 2**

301 Réceptionner une demande de détermination automatique des jeux mécaniques réels des actionneurs d'une même surface de contrôle

302 Exécuter une boucle d'asservissement en position et collecter des premières données et des deuxièmes données

303 Déterminer le jeu mécanique relatif réel J entre les actionneurs d'une même surface de contrôle

304 $J \geq S$ — non

oui

305 Générer un message d'alerte

**Fig. 3**

**Fig. 4**

**Fig. 5**

Europäisches
Patentamt

European
Patent Office

Office européen
des brevets

## RAPPORT DE RECHERCHE EUROPEENNE

Numéro de la demande

**EP 25 21 7421**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JP 2019 172175 A (MITSUBISHI AIRCRAFT CORP) 10 octobre 2019 (2019-10-10) * abrégé; figures 1-8 * * voir traduction annexée et passages cités dans l'opinion écrite * ----- | 1-9 | INV. B64C9/02 B64C13/24 B64D45/00 |
| A | US 2020/247530 A1 (HUET SYLVAIN [FR]) 6 août 2020 (2020-08-06) * abrégé; figures 2,3 * ----- | 1-9 | |
| A | DE 10 2019 118639 A1 (LIEBHERR AEROSPACE LINDENBERG GMBH [DE]) 14 janvier 2021 (2021-01-14) * abrégé; figures 1,2 * ----- | 1-9 | |
| A | US 2022/380022 A1 (ROBERTS DANIEL HENRY [US] ET AL) 1 décembre 2022 (2022-12-01) * abrégé; figure 2 * ----- | 1-9 | |

**DOMAINES TECHNIQUES RECHERCHES (IPC)**

B64C
B64D

Le présent rapport a été établi pour toutes les revendications

| Lieu de la recherche | Date d'achèvement de la recherche | Examinateur |
|---|---|---|
| Munich | 30 mars 2026 | Cesaro, Ennio |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 7421

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2026

| Document brevet cité au rapport de recherche | Date de publication | Membre(s) de la famille de brevet(s) | Date de publication |
|---|---|---|---|
| JP 2019172175 A | 10-10-2019 | JP 7066481 B2<br>JP 2019172175 A | 13-05-2022<br>10-10-2019 |
| US 2020247530 A1 | 06-08-2020 | FR 3092394 A1<br>US 2020247530 A1 | 07-08-2020<br>06-08-2020 |
| DE 102019118639 A1 | 14-01-2021 | AUCUN | |
| US 2022380022 A1 | 01-12-2022 | CA 3160376 A1<br>DE 102022113472 A1<br>FR 3123316 A1<br>US 2022380022 A1 | 28-11-2022<br>01-12-2022<br>02-12-2022<br>01-12-2022 |

EPO FORM P0460

Pour tout renseignement concernant cette annexe : voir Journal Officiel de l'Office européen des brevets, No.12/82

# EP 4 755 793 A1

## RÉFÉRENCES CITÉES DANS LA DESCRIPTION

**Documents brevets cités dans la description**

- JP 2019172175 A